# EUROPÄISCHE PATENTSCHRIFT

(11) **EP 1 643 211 B1**
(45) Veröffentlichungstag und Bekanntmachung des Hinweises auf die Patenterteilung: **29.07.2009**
(21) Anmeldenummer: 05019726.8
(22) Anmeldetag: 10.09.2005
(51) Int. Cl.: G01C 13/00

(54) **Messverfahren und -vorrichtung zur Bestimmung der Tiefe eines sich ausbildenden Kolkes**
Measuring method and device for determining the depth of an erosion as it forms
Procédé et dispositif de mesure pour déterminer la profondeur d'une érosion qui se forme

(30) Priorität: 30.09.2004 DE 102004047529
(43) Veröffentlichungstag der Anmeldung: 05.04.2006
(73) Patentinhaber: Technische Universität Hamburg-Harburg, 21073 Hamburg (DE); TuTech Innovation GmbH, 21079 Hamburg (DE)
(72) Erfinder: Grabe, Jürgen, Univ.-Prof. Dr.-Ing., 21075 Hamburg (DE)
(74) Vertreter: Hansen, Jochen

(56) Entgegenhaltungen:
- DD-A1- 42 194
- DE-A1- 3 526 427
- US-A- 5 479 724

## Beschreibung

Die Erfindung betrifft ein Messverfahren sowie eine Messvorrichtung zur Bestimmung der Tiefe eines sich in der aus Sedimenten oder dergleichen bestehenden Sohle an von Flüssigkeiten, insbesondere Wasser, angeströmten bzw. umströmten Baukörpern bildenden Kolkes, insbesondere bei An- und Ablegemanövern von Schiffen an Kaimauern.

Aus der DD 42 194 ist eine automatische Peilstange bekannt, die in einem lotrecht befestigten Führungsrohr eine Lagerung besitzt, mit der ein bogenförmig ausgebildetes, unteres Ende der Peilstange bei lateralen Bewegungen der Peilstange auf einem schwimmenden Fahrzeug über der Gewässersohle mit dem bogenförmigen Ende mit einer an der äußersten Spitze angeordneten abgerundeten Verbreiterung in jeder Richtung auf der Sohle des Gewässers nachschleppend gleiten und Hindernisse auf dem Boden des Gewässers überwinden kann. Auf dem Sediment aufliegendes Element ist somit lediglich die äußerste Spitze des bogenförmig ausgebildeten unteren Endes der Peilstange. Die äußerste Spitze weist eine Verbreiterung auf.

Die DE 35 26 427 A1 beschreibt ein Lot zur Messung der Höhe von Schlick oder Schlamm, dabei ist das Stabgewicht und der Durchmesser der Messlanze so eingestellt, dass sie durch das Eigengewicht bis auf den Grund der Schlick- oder Schlammschicht einsinken kann.

Aus der US 5,479,724 ist ein Messverfahren zur Bestimmung der Tiefe eines sich in der aus Sedimenten oder dergleichen bestehenden Sohle an von Flüssigkeiten, insbesondere Wasser, angeströmten bzw. umströmten Baukörpern bildenden Kolkes durch Feststellen der Sinktiefe an wenigstens einem Messpunkt nahe dem Baukörper durch ein auf dem Sediment aufliegendes, vertikal bewegbares Sinkstück bekannt.

An von Flüssigkeiten, insbesondere Wasser, angeströmten bzw. umströmten Baukörpern entsteht je nach Strömungseinwirkung und Bodenbeschaffenheit der an den Baukörper angrenzenden Sedimente (Sohle) eine partielle Bodenerosion. Diese sich strömungsabhängig bildenden "Ausspülungen" werden Kolke genannt. Derartige Phänomene treten an in einem strömenden Wasserkörper angeordneten Gründungen und/oder Fundamenten auf. Mit derartigen Gründungen oder Fundamenten sind beispielsweise Brückenpfeiler, Duckdalben, Stützbeine von Offshore-Anlagen, wie Windkraftanlagen oder Bohrinseln, oder dergleichen gemeint.

Eine besonders starke Kolkbildung ist bei An- und Ablegemanövern von Schiffen an Kaimauern zu erwarten. Durch die hohen Antriebsleistungen moderner Schiffe, die meist neben dem Schiffshauptantrieb mit Bugstrahlrudern ausgestattet sind, ist die Gefahr und das Ausmaß der Kolkbildung vor Kaianlagen extrem gestiegen. Besonders hoch ist die Beanspruchung der Sohle, also der Sedimente vor der Kaianlage, beim Ablegemanöver. Da zunehmend auch große Seeschiffe ausschließlich mit eigener Maschinenleistung, also ohne Unterstützung von Schleppern, ablegen, wirken aufgrund der unmittelbaren Anströmung enorme Strömungsgeschwindigkeiten auf die Kaianlage und deren Sohle. Besonders kritisch ist die Kolkbildung bei Ro-Ro-Schiffen und Fährschiffen, deren Antriebe aufgrund der festen Anlagestellen immer wieder am gleichen Ort orientiert sind.

Ein Kolk kann zum lokalen, kurzzeitigen Verlust der Standsicherheit einer Kaimauer führen. Da der Kolk in Querrichtung in seiner Ausdehnung begrenzt ist, findet eine Lastumlagerung in Längsrichtung der Kaimauer statt. Wiederholte Kolke können zum Wandern der Kaimauer wasserseitig führen. Somit stellen Kolke im schlimmsten Fall eine Gefährdung der Standsicherheit dar. Kleinere Kolke beeinflussen die Dauerhaftigkeit bzw. Funktion der Kaimauer.

Die Kolkbildung an Kaianlagen wurde von der Universität Hannover und dem Franzius-Institut für Wasserbau und Küsteningenieurwesen im Projekt "Propellerstrahlinduzierte Erosionen vor Kaianlagen" gemäß Auszug aus Mitteilung des Franzius-Institut für Wasserbau und Küsteningenieurwesen, 1994, insbesondere hinsichtlich möglicher Schutzmaßnahmen untersucht.

Es wird daher in einigen Häfen ein Kolkschutzsystem zur Vermeidung von Kolken eingesetzt. Diese Kolkschutzsysteme bieten erfahrungsgemäß keinen dauerhaften Schutz. Die hohen Investitionskosten und erhöhte Betriebskosten bei Baggerarbeiten lassen Kolkschutzsysteme unwirtschaftlich erscheinen.

Ein anderer Weg zur Sicherung der Kaianlagen besteht in einem Kolktiefenzuschlag, der bei der planerischen Bemessung der Kaimauern angesetzt wird. Im Hamburger Hafen beträgt der Kolktiefenzuschlag beispielsweise ca. 2 m. Der Kolktiefenzuschlag basiert auf Schätzungen, wobei jeder Meter Zuschlag erhebliche Investitionsmittel erfordert, wohingegen ein zu geringer Zuschlag die Standsicherheit und Gebrauchstauglichkeit der Kaianlage gefährdet.

Die Messung der Kolktiefe während der Kolkbildung ist bisher nicht durchführbar. Bekannte Sonarverfahren und optische Verfahren sind für die dabei auftretenden turbulenten Partikelströmungen ungeeignet. Da zudem die bei einem Schiffsmanöver entstehenden Kolke häufig gleich wieder zugespült werden, gibt eine nachträgliche Messung der Sohlenlage an Kaimauern keinen Aufschluss über die sich tatsächlich bei Schiffsmanövern an Kalanlagen bildenden Kolke.

Ausgehend von der US 5,479,724 ist es Aufgabe der Erfindung ein Messverfahren und eine Messvorrichtung zur Bestimmung der Tiefe eines sich bildenden Kolkes anzugeben, mit dem die Kolke auch während der Anströmung vermessen werden können.

Gelöst wird diese Aufgabe mit einem Messverfahren gemäß Anspruch 1 bzw. mit einer Messvorrichtung gemäß Anspruch 7.

Das Messverfahren zur Erfassung der Kolkbildung kann insbesondere auch in Häfen an Kaimauern eingesetzt werden, wobei eine Überwachung der Kolkbildung oder Kolkentstehung während An- und Ablegemanövern von Schiffen möglich wird.

Vorrichtungsgemäß ist ein im wesentlichen vertikal frei bewegbares, aber zwangsgeführtes Sinkstück vorgesehen, wobei das Sinkstück ein größeres Gewicht als das Gewicht der Volumenverdrängung der Flüssigkeit hat. Mit dem auf der Sohle aufliegenden Sinkstück kann in mechanisch einfacher und für den rauhen Alltagseinsatz geeigneter Weise die jeweilige Kolkausbildung, nämlich die Tiefe des Kolkes an dem entsprechenden Messpunkt verifiziert werden.

Dabei wird bevorzugt die Sinktiefe des Sinkstücks mechanisch und/oder elektrisch erfasst. In der turbulenten Partikelströmung versagen Sonar- und optische Verfahren. Bei An- und Ablegemanövern von Schiffen verhindern durch Schraubenkavitation bedingte Luftbläschen die Anwendung von Ultraschallmessverfahren. Die jeweilige Sinktiefe kann beipielsweise ähnlich wie ein Pegelanzeiger auf einer Skala oberhalb des Wasserkörpers übertragen werden. Zur Erfassung der Sinktiefe und Übertragung an die Oberfläche sind folglich mechanische und/oder elektrische Wegaufnehmer vorgesehen.

Zur vertikalen Zwangsführung kann das Sinkstück ringförmig einen Führungspfahl umgreifend frei auf- und abbewegbar ausgebildet sein. Als Führungspfahl können dabei sowohl die an Kaimauern üblichen Reibepfähle wie auch gesondert eingesetzte Messpfähle verwendet werden. Durch die Umgreifung des Führungspfahls mit dem ringförmig ausgebildeten Sinkstück wird ein innen geführtes Sinkstück verwirklicht. Die Tiefenlagemessung des Sinkstücks kann dabei über Ketten, innen geführte Seile oder mechanisch/elektrische Wegaufnehmer erfolgen.

Alternativ weist das Sinkstück eine nach oben gerichtete stabartige Verlängerung auf, die in einem feststehenden Rohr bzw. Rohrabschnitten auf- und abbewegbar geführt ist, womit ein außen geführtes Sinkstück angegeben ist. Dabei kann die tiefenmäßige Lageveränderung der stabartigen Verlängerung des Sinkstücks gegenüber dem festehenden Rohr mit entsprechenden Markierungen unmittelbar als Anzeige dienen oder durch entsprechende Wegaufnehmer in ein elektrisches Signal umgewandelt werden.

Wenn die momentane Kolktiefe gemessen werden soll, ist das Sinkstück schwerer als die Flüssigkeit, aber leichter als die Sedimente ausgebildet. Genauer gesagt ist das spezifische Gewicht des Sinkstücks zwischen dem spezifischen Gewicht der Flüssigkeit (Wasser) und dem spezifischen Gewicht der Sedimente eingestellt. Sollte eine Auskolkung während der Messdauer wieder zugespült werden, erfährt das Sinkstück, das ein Gewicht hat, das kleiner ist als das Gewicht der Volumenverdrängung im Sediment, also leichter als eine tragfähige Bodendichte ist, im Sediment Auftrieb und steigt zur Grenzfläche Sediment/Flüssigkeit auf.

Das Auftriebskraft bedingte Wiederaufsteigen des Sinkstückes kann durch Verdrängung von Wasser mittels Einpressen von Luft unterstützt werden. Alternativ kann auch Flüssigkeit von einem Volumina im Sinkstück in ein Volumina außerhalb des Sinkstücks umgepumpt werden. Mit diesen Maßnahmen wird jeweils die am Sinkstück wirkende Auftriebskraft vergrößert.

Ebenso kann die Formgebung des Sinkstückes das Wiederauftauchen aus dem Sediment erleichtern. Dies wird insbesondere dadurch erreicht, dass das Sinkstück annähernd Doppelkegelform hat, bei der die Kegelgrundflächen einander zugewandt ggf. mit einem zwischengefügten zylindrischen Abschnitt angeordnet sind und die Kegelspitzen nach unten und oben zeigen.

Wenn eine Auswerteeinheit zur Aufnahme, Auswertung, Übertragung und/oder Anzeige der Sinktiefe des Sinkstückes vorgesehen ist, kann die gemessene Kolktiefe während des An- und Ablegemanövers dem Schiffspersonal signalisiert werden. Ferner können die Daten zur Beweissicherung bei einer übermäßig belasteten oder beschädigten Kaimauer oder zur Erfassung von Langzeitauswirkungen verwendet werden.

Dadurch, dass die Auswerteeinheit Mittel zur drahtlosen Übertragung der gemessenen Sinktiefe und/oder der ausgewerteten Messwerte hat, kann die gemessene Kolktiefe, insbesondere die momentane Kolktiefe auf das an- bzw. ablegende Schiff fernübertragen werden. Bei vorher festgelegten Grenzwerten können dann unmittelbar Schutzmaßnahmen von der Schiffsführung zur Vermeidung einer übermäßigen Belastung der Kaimauer, beispielsweise die Reduzierung der Antriebsleistung beim momentan gefahrenen Manöver, ergriffen werden.

Bei einer bevorzugten Anordnung zur Kolktiefenbestimmung an einer Kaimauer sind eine Vielzahl von Messvorrichtungen in einer Reihe beabstandet zueinander nahe der Kaimauer vorgesehen. Mit dieser Messanordnung kann die Kolkausbildung an beliebiger Stelle entlang einer Kaimauer verifiziert werden. Außerdem ist es möglich, auch eine Aussage über die Längserstreckung der Kolkausbildung zu treffen.

Nachfolgend werden vier Ausführungsbeispiele für die erfindungsgemäße Messvorrichtung Bezug nehmend auf die beiliegenden Zeichnungen detailliert beschrieben.

Darin zeigt:
- Fig. 1: ein an einem Pfahl geführtes ringförmiges Sinkstück in einer teils geschnittenen Seitenansicht,
- Fig. 2: die Messvorrichtung der Fig. 1 in teils geschnittener Draufsicht,
- Fig. 3: in einer teils geschnittenen Seitenansicht eine Kolktiefenmessvorrichtung in einem zweiten Ausführungsbeispiel,
- Fig. 4: eine Abwandlung der in Fig. 3 dargestellten Messvorrichtung und
- Fig. 5: eine alternative Abwandlung der in Fig. 3 dargestellten Messvorrichtung.

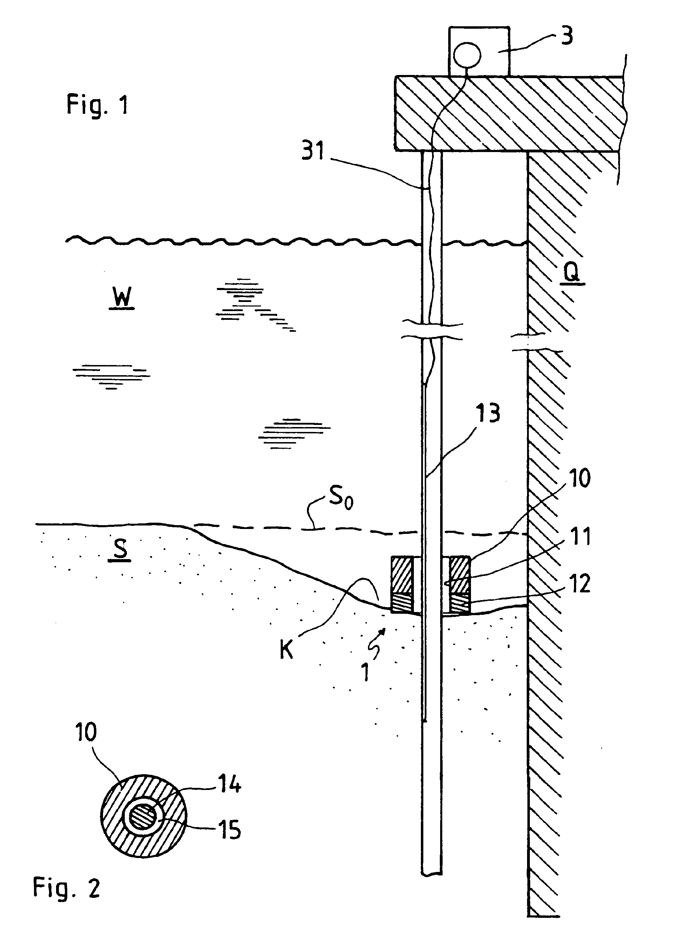

In Fig. 1 ist schematisch ein als Kaianlage Q ausgestalteter Baukörper mit der angrenzenden Sohle S, bestehend aus Sedimenten, und einem Wasserkörper W in einer typischen Hafenanlagenkonstellation dargestellt. Aufgrund von hochturbulenten, propellerstrahlinduzierten Strömungen im Wasserkörper W ist momentan im Bereich der anfänglich als eben angenommenen Sohle S gemäß gestrichelter So Linie vor der Kaimauer Q eine tiefe Sedimentausspülung in Form eines Kolkes K entstanden.

In Fig. 1 ist ein Sinkstück 1 mit einem zylinderringförmigen Körper 10 dargestellt, der einen im wesentlichen vertikal angeordneten Pfahl 14 umgreift.
Die Anordnung ist in der Draufsicht gemäß Fig. 2 ersichtlich. Innerhalb des ringförmigen Sinkstückkörpers 10 ist der Führungspfahl 14 mit die einwandfreie Beweglichkeit des Sinkstücks 1 erlaubendem Spiel 15 angeordnet. Im Vergleich zum freien Innendurchmesser des ringförmigen Sinkstücks 1 ist die Höhenerstreckung des Sinkstückkörpers 10 jedenfalls im Führungsbereich um den Führungspfahl 14 so groß gewählt, dass ein Verkanten des Sinkstücks 1 am Führungspfahl 14 auch bei einer steil abfallenden Kolkböschung vermieden wird. Im in Fig. 1 dargestellten Ausführungsbeispiel ist dies durch eine zylindrische Innenfläche 11, beispielsweise in Form eines Rohrabschnitts, gewährleistet.

Am unteren Ende des über den Führungspfahl 14 im wesentlichen vertikal geführten Sinkstückkörpers 10 ist ein Ballastgewicht 12 auf die Umfangslinie des Sinkstücks 1 gleichmäßig verteilt angeordnet. Beispielsweise ist das Ballastgewicht 12 als zylinderringförmiger Abschnitt aus einem Material hoher Dichte, beispielsweise Stahl, Blei etc. ausgebildet.

Ferner ist zwischen Pfahl 14 und Sinkstück 1 ein nicht näher spezifizierter Wegaufnehmer 13 angeordnet, der die jeweilige Lage des Sinkstücks 1 im Verhältnis zum Führungspfahl 14 feststellt. Das Messsignal wird über Wirkleitung 31 auf eine auf der Kaianlage Q installierte Auswerteeinheit 3 übertragen. Bevorzugt liefert der Wegaufnehmer 13 ein elektrisches Signal, das der Auswerteeinheit 3 über die Wirkleitung 31, zum Beispiel durch den Führungspfahl 14 übermittelt wird.

Die Auswerteeinheit 3 enthält dabei wenigstens eine Einrichtung zur Anzeige der jeweilig gemessenen Sinktiefe des Sinkstückes 1. Weiter bevorzugt weist die Auswerteeinheit 3 Mittel zur Aufnahme, Auswertung und Übertragung der Messwerte auf. Es können somit die jeweilig gemessenen Kolktiefen zur Beweissicherung von Belastungszuständen der Kaimauer Q bzw. für Langzeitbeobachtungen gespeichert werden. Bei einer Auswertung können übermäßige Belastungszustände unmittelbar ermittelt werden und beispielsweise über Warnsignale, möglicherweise fernübertragen auf die Brücke des an- /ablegenden Schiffes an das Schiffspersonal übermittelt werden. Somit können unmittelbar das Gefährdungspotenzial reduzierende Maßnahmen, beispielsweise momentane Reduzierung der Antriebsleistung von Hauptmaschine und/oder Bugstrahlruder, getroffen werden.

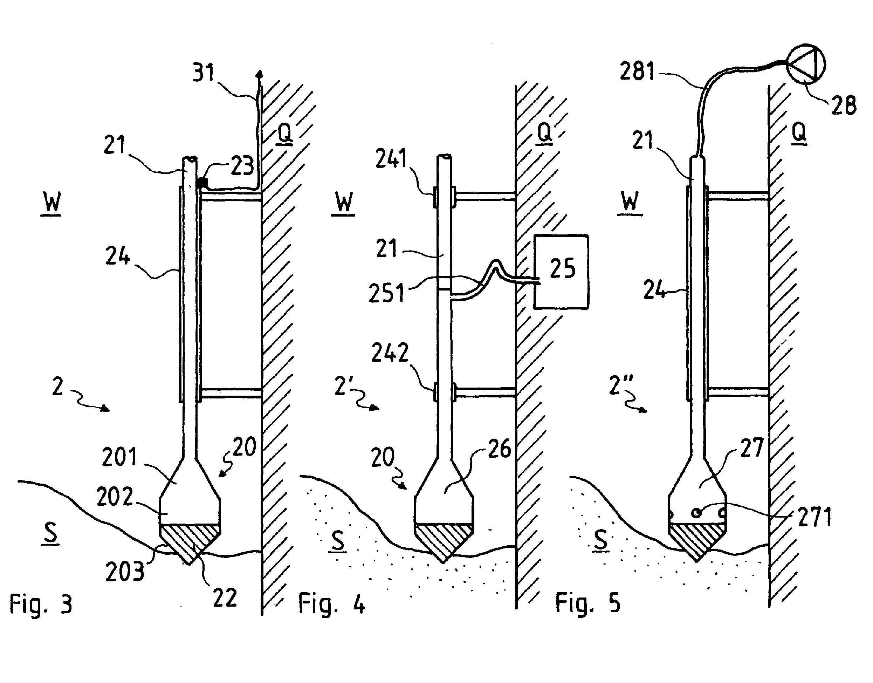

In Fig. 3 ist in einer zweiten Ausführungsform im Gegensatz zum erstgenannten Ausführungsbeispiel ein außen geführtes Sinkstück 2 dargestellt. Das Sinkstück 2 besteht aus einem doppelkegelförmigen Körper 20 und einer stabartigen Verlängerung 21. Die Doppelkegelform des Sinkstückkörpers 20 weist einen unteren kegelförmigen Abschnitt 203 mit einer in Einbaulage des Sinkstücks 2 nach unten zeigenden Kegelspitze auf. An die Kegelgrundfläche des unteren kegelförmigen Abschnitts 203 schließt sich ein zylindrischer Mittenabschnitt 202 an, an dessen Oberseite ein oberer kegelförmiger Abschnitt 201 mit seiner Kegelgrundfläche anschließt. An der in Einbauzustand nach oben zeigenden Kegelspitze des oberen kegelförmigen Abschnitts 201 ist die stabartige Verlängerung 21 angefügt.

Im Sinkstückkörper 20 ist ein Ballastgewicht 22 aus einem Material hoher Dichte, beispielsweise Eisen, Blei etc. eingefüllt bzw. der betreffende Abschnitt des Sinkstückkörpers 20 aus diesem Material hergestellt. Dabei wird das Gewicht des Sinkstücks 2 so eingestellt, dass es im Wasserkörper W absinkt, jedoch im Sediment der Sohle S Auftriebskraft bedingt nach oben steigt, also stets auf der jeweils ausgebildeten Grenzfläche zwischen Sediment S und Wasserkörper W aufliegt.

Die Doppelkegelform des Sinkstückkörpers 20 soll dabei insbesondere verhindern, dass beim Wiederverfüllen des Kolkes etwaig am Sinkstück 2 anhaftende Sedimente den Auftrieb des Sinkstücks 2 verhindern könnten. Der obere kegelförmige Abschnitt 201 sollte daher bevorzugt steil und in seiner Oberfläche glatt ausgebildet sein, um Anhaftungen zu vermeiden. Ebenso ist der untere kegelförmige Abschnitt 203 in seiner Oberfläche glatt ausgebildet, um weitestgehend dem Auftrieb entgegenwirkende Kräfte, beispielsweise durch ein "Festsaugen" des Sinkstückkörpers 20 im Sediment zu vermeiden.

Die stabartige Verlängerung 21 des Sinkstücks 2 ist bei dieser Ausführungsform in einem fest an der Kaimauer Q oder einem Pfahl befestigten Führungsrohr 24 vertikal verschiebbar zwangsgeführt.

Wenn die stabartige Verlängerung 21 bis zur Oberfläche verlängert ist, kann die jeweilige Lage des oberen Endes der stabartigen Verlängerung 21 unmittelbar die Tiefenlage des Sinkstücks 2 anzeigen. Bevorzugt ist jedoch zwischen stabartiger Verlängerung 21 und Führungsrohr 24 ein Wegaufnehmer 23 vorgesehen, der wiederum über eine Wirkleitung 31 zur Auswerteeinheit 3 die ermittelte Tiefenlage zur Weiterbearbeitung meldet.

In Fig. 4 ist eine abgewandelte Ausführungsform der Messvorrichtung gemäß Fig. 3 mit einem Sinkstück 2' dargestellt, bei der die stabartige Verlängerung 21 über zwei fest angeordnete Führungsrohrabschnitte 241, 242 vertikal verschiebbar zwangsgeführt ist. Zwischen den Führungsrohrabschnitten 241 und 242 ist an der stabartigen Verlängerung 21 über eine flexible Schlauchleitung 251 ein ortsfest gehalterter Behälter 25 angeschlossen. Dabei ist eine nicht näher dargestellte Pumpeinrichtung vorgesehen, die eine in einem Tank 26 im Sinkstückkörper 20 vorgehaltene Flüssigkeit aus dem Sinkstück 2' in den Behälter 25 pumpen kann, womit das Gesamtgewicht des Sinkstücks 2' reduziert wird. Folglich wird die am Sinkstück 2' wirkende Auftriebskraft bei vollständiger oder teilweiser Überdeckung des Sinkstückkörpers 20 mit Sedimenten erhöht und somit das Aufsteigen des Sinkstücks 2' unterstützt.

Alternativ zur Ausgestaltung gemäß Fig. 4 ist in Fig. 5 eine Messvorrichtung dargestellt, die vom Aufbau her ähnlich zu der in Fig. 3 dargestellten ist. Im Unterschied zur in Fig. 3 dargestellten Ausführungsform weist das Sinkstück 2" jedoch einen mit dem Wasserkörper W über Verbindungsöffnungen 271 verbundenen Hohlraum 27 auf. An dem Hohlraum 27 ist über die stabartige Verlängerung 21 eine Druckluftquelle 28 über einen flexiblen Druckluftschlauch 281 angeschlossen. Bei Aktivierung der Druckluftquelle 28 wird das im Hohlraum 27 befindliche Wasser über Verbindungsöffnungen 271 aus dem Sinkstück 2" herausgedrückt. Dementsprechend verringert sich das spezifische Gesamtgewicht des Sinkstücks 2", so dass sich die Auftriebswirkung des Sinkstücks 2" bei teilweiser oder vollständiger Bedeckung mit Sedimenten erhöht und somit das Aufsteigen des Sinkstücks 2" unterstützt wird.

### Bezugszeichenliste

- 1: Sinkstück
- 10: Körper
- 11: zylindrische Innenfläche
- 12: Ballastgewicht
- 13: Wegaufnehmer
- 14: Führungspfahl
- 15: Spiel

- 2, 2', 2": Sinkstück
- 20: Körper
- 201: oberer kegelförmiger Abschnitt
- 202: zylindrischer Abschnitt
- 203: unterer kegelförmiger Abschnitt
- 21: stabartige Verlängerung
- 22: Ballastgewicht
- 23: Wegaufnehmer
- 24: Führungsrohr
- 241: Führungsrohrabschnitt
- 242: Führungsrohrabschnitt
- 25: Behälter
- 251: Schlauchleitung
- 26: Tank
- 27: Hohlraum
- 271: Verbindungsöffnungen
- 28: Druckluftquelle
- 281: Druckluftschlauch

- 3: Auswerteeinheit
- 31: Wirkleitung

- K: Kolk
- Q: Kaianlage, Kaimauer
- S: Sediment, Sohle
- Sₒ: Nulllage der Sohle
- W: Wasserkörper

## Patentansprüche

1. Messverfahren zur Bestimmung der Tiefe eines sich in der aus Sedimenten oder dergleichen bestehenden Sohle an von Flüssigkeiten, insbesondere Wasser, angeströmten bzw. umströmten Baukörpern bildenden Kolkes, insbesondere bei An- und Ablegemanövern von Schiffen an Kaimauern, durch Feststellen der Sinktiefe an wenigstens einem Messpunkt nahe dem Baukörper durch ein auf dem Sediment aufliegendes, vertikal bewegbares Sinkstück, **dadurch gekennzeichnet, dass** die momentane Kolktiefe gemessen wird, wobei das Sinkstück schwerer als die Flüssigkeit ist, aber bei nachfolgender Sedimentation auftriebskraftbedingt im Sediment wieder aufsteigt und stets auf der Grenzfläche Sediment/Flüssigkeit aufliegt.

2. Messverfahren nach Anspruch 1, **dadurch gekennzeichnet, dass** das Wiederaufsteigen bzw. Anheben des Sinkstücks durch Verdrängen von Wasser mittels Einpressen von Luft unterstützt wird.

3. Messverfahren nach Anspruch 1, **dadurch gekennzeichnet, dass** das Wiederaufsteigen bzw. Anheben des Sinkstücks durch Umpumpen von einer Flüssigkeit von einem Volumen im Sinkstück in ein Volumen außerhalb des Sinkstücks unterstützt wird.

4. Messverfahren nach einem der vorangehenden Ansprüche, **dadurch gekennzeichnet, dass** die Sinktiefe des Sinkstücks mechanisch und/oder elektrisch erfasst wird.

5. Messverfahren nach einem der vorangehenden Ansprüche, **dadurch gekennzeichnet, dass** die gemessene Kolktiefe übertragen, gespeichert und/oder angezeigt wird.

6. Messverfahren nach Anspruch 5, **dadurch gekennzeichnet, dass** die gemessene momentane Kolktiefe auf das an- bzw. ablegende Schiff fernübertragen wird.

7. Messvorrichtung zur Bestimmung der Tiefe eines sich in der aus Sedimenten oder dergleichen bestehenden Sohle (S) an von Flüssigkeiten (W), insbesondere Wasser, angeströmten bzw. umströmten Baukörpern (Q) bildenden Kolkes (K), insbesondere bei An- und Ablegemanövern von Schiffen an Kaimauern, wobei ein im wesentlichen vertikal frei bewegbares, aber zwangsgeführtes Sinkstück (1, 2, 2', 2") vorgesehen ist, das ein größeres Gewicht als das Gewicht der Volumenverdrängung der Flüssigkeit hat, **dadurch gekennzeichnet, dass** das Sinkstück (1, 2, 2', 2") ein Gewicht hat, das kleiner ist als das Gewicht der Volumenverdrängung im Sediment (S).

8. Messvorrichtung nach Anspruch 7, **dadurch gekennzeichnet, dass** das Sinkstück (1) ringförmig einen Führungspfahl (14) umgreifend frei auf- und abbewegbar ausgebildet ist.

9. Messvorrichtung nach Anspruch 7, **dadurch gekennzeichnet, dass** das Sinkstück (2, 2', 2") eine nach oben gerichtete stabartige Verlängerung (21) aufweist, die in einem feststehenden Rohr (24) bzw. Rohrabschnitten (241, 242) auf- und abbewegbar geführt ist.

10. Messvorrichtung nach Anspruch 7, 8 oder 9, **dadurch gekennzeichnet, dass** das Sinkstück (2, 2', 2") annähernd Doppelkegelform hat, bei der die Kegelgrundflächen einander zugewandt ggf. mit einem zwischengefügten zylindrischen Abschnitt (202) angeordnet sind und die Kegelspitzen nach unten und oben zeigen.

11. Messvorrichtung nach einem der Ansprüche 7 bis 10, **dadurch gekennzeichnet, dass** zur Erfassung der Sinktiefe und Übertragung des Messergebnisses an die Oberfläche mechanische und/oder elektrische und/oder akustische Wegaufnehmer (13, 23) vorgesehen sind.

12. Messvorrichtung nach einem der Ansprüche 7 bis 11, **dadurch gekennzeichnet, dass** eine Auswerteeinheit (3) zur Aufnahme, Auswertung, Übertragung und/oder Anzeige der Sinktiefe des Sinkstückes (1, 2, 2', 2") vorgesehen ist.

13. Messvorrichtung nach Anspruch 12, **dadurch gekennzeichnet, dass** die Auswerteeinheit (3) Mittel zur drahtlosen Übertragung der gemessenen Sinktiefe und/oder der ausgewerteten Messwerte hat.

14. Messanordnung an einer Kaimauer (Q), **dadurch gekennzeichnet, dass** eine Vielzahl von Messvorrichtungen gemäß einem der Ansprüche 7 bis 13 in einer Reihe beabstandet zueinander nahe der Kaimauer (Q) vorgesehen sind.

## Claims

1. A measuring method for determining the depth of a scour forming in the bed, consisting of sediments or the like, at structures against or around which fluids, in particular water, flow, in particular during docking and undocking manoeuvres of ships at quay walls, by ascertaining the sinking distance at at least one measuring point close to the structure by means of a vertically movable sinking piece resting on the sediment, **characterised in that** the current scour depth is measured, wherein the sinking piece is heavier than the fluid, however during subsequent sedimentation rises again in the sediment due to buoyancy and always rests on the boundary surface between the sediment and the fluid.

2. A measuring method according to claim 1, **characterised in that** the rising again or lifting of the sinking piece is promoted by the displacement of water by means of air being forced in.

3. A measuring method according to claim 1, **characterised in that** the rising again or lifting of the sinking piece is promoted by the transference by pumping of a fluid from a volume in the sinking piece into a volume exterior to the sinking piece.

4. A measuring method according to any one of the preceding claims, **characterised in that** the sinking distance of the sinking piece is determined mechanically and/or electrically.

5. A measuring method according to any one of the preceding claims, **characterised in that** the measured scour depth is transmitted, stored and/or displayed.

6. A measuring method according to claim 5, **characterised in that** the measured current scour depth is transmitted remotely to the docking or undocking ship.

7. A measuring device for determining the depth of a scour (K) forming in the bed (S), consisting of sediments or the like, at structures (Q) against or around which fluids (W), in particular water, flow, in particular during docking and undocking manoeuvres of ships at quay walls, wherein there is provided a sinking piece (1, 2, 2', 2'') which is substantially freely movable in a vertical manner but is forcibly guided and whose weight is greater than the weight of the volume displacement of the fluid, **characterised in that** the weight of the sinking piece (1, 2, 2', 2") is less than the weight of the volume displacement in the sediment (S).

8. A measuring device according to claim 7, **characterised in that** the sinking piece (1) is freely movable up and down, annularly engaging around a guide post (14).

9. A measuring device according to claim 7, **characterised in that** the sinking piece (2, 2', 2") has an upwardly-directed rod-like projection (21) guided in a fixed pipe (24) or pipe sections (241, 242) so as to be movable up and down.

10. A measuring device according to claim 7, 8 or 9, **characterised in that** the sinking piece (2, 2', 2") has approximately the form of a double cone with the cone bases arranged facing one another, optionally with an intercalated cylindrical portion (202),and the apexes directed downwards and upwards.

11. A measuring device according to any one of claims 7 to 10, **characterised in that** mechanical and/or electrical and/or acoustic position sensors (13, 23) are provided to determine the sinking distance and to transmit the measuring result to the surface.

12. A measuring device according to any one of claims 7 to 11, **characterised in that** an evaluation unit (3) is provided to receive, evaluate, transmit and/or display the sinking distance of the sinking piece (1, 2, 2', 2").

13. A measuring device according to claim 12, **characterised in that** the evaluation unit (3) has means for the wireless transmission of the measured sinking distance and/or the evaluated measured values.

14. A measuring arrangement at a quay wall (Q), **characterised in that** a plurality of measuring devices according to any one of claims 7 to 13 are provided close to the quay wall (Q), at a distance from one another in a row.

## Revendications

1. Procédé de mesure pour déterminer la profondeur d'un affouillement se formant à partir de sédiments ou d'un fond de lit existant similaire au niveau de corps de bâtiment contre lesquels et/ou autour desquels affluent des liquides, en particulier de l'eau, notamment lors de manoeuvres d'accostage et d'appareillage de bateaux contre des murs de quai, par la détermination de la profondeur d'enfoncement en au moins un point de mesure à proximité du corps de bâtiment à l'aide d'un élément plongeant reposant sur le sédiment et mobile verticalement, **caractérisé en ce qu'**on mesure la profondeur d'affouillement instantanée, l'élément plongeant étant plus lourd que le liquide, mais remontant dans le sédiment lors de la sédimentation ultérieure sous l'effet de la force ascensionnelle et se trouvant toujours à l'interface sédiment/liquide.

2. Procédé de mesurage selon la revendication 1, **caractérisé en ce que** la remontée et/ou le soulèvement de l'élément plongeant est assisté par un refoulement de l'eau au moyen d'une injection d'air.

3. Procédé de mesure selon la revendication 1, **caractérisé en ce que** la remontée et/ou le soulèvement de l'élément plongeant est assisté par le transfert par pompage d'un liquide d'un volume se trouvant à l'intérieur de l'élément plongeant dans un volume se trouvant à l'extérieur de l'élément plongeant.

4. Procédé de mesurage selon une des revendications précédentes, **caractérisé en ce que** la profondeur d'enfoncement de l'élément plongeant est déterminée mécaniquement ou électriquement.

5. Procédé de mesurage selon une des revendications précédentes, **caractérisé en ce que** la profondeur d'affouillement mesurée est transmise, mémorisée et/ou affichée.

6. Procédé de mesurage selon la revendication 5, **caractérisé en ce que** la profondeur d'affouillement instantanée mesurée est télétransmise au bateau accostant ou appareillant.

7. Dispositif de mesure pour déterminer la profondeur d'un affouillement (K) se formant à partir de sédiments ou d'un fond de lit existant similaire (S) au niveau de corps de bâtiment (Q) contre lesquels et/ou autour desquels affluent des liquides (W), en particulier de l'eau, notamment lors des manoeuvres d'accostage et d'appareillage de bateaux contre des murs de quai, dans lequel il est prévu un élément plongeant (1, 2, 2', 2") librement mobile sensiblement à la verticale mais guidé de force, lequel présente un poids supérieur au poids du déplacement volumique du liquide, **caractérisé en ce que** l'élément plongeant (1, 2, 2', 2") présente un poids qui est inférieur au poids du déplacement volumique dans le sédiment (S).

8. Dispositif de mesure selon la revendication 7, **caractérisé en ce que** l'élément plongeant (1) entourant en forme d'anneau un piquet de guidage (14) est réalisé pour pouvoir effectuer librement un mouvement montant et descendant.

9. Dispositif de mesure selon la revendication 7, **caractérisé en ce que** l'élément plongeant (2, 2', 2") présente un prolongement (21) en forme de barre dirigé vers le haut qui est guidé dans un tube fixe (24) ou des sections de tube (241, 242) de manière à pouvoir effectuer un mouvement montant et descendant.

10. Dispositif de mesure selon l'une des revendications 7, 8 ou 9, **caractérisé en ce que** l'élément plongeant (2, 2', 2") présente approximativement la forme d'un double cône, dans lequel les surfaces de base du cône sont disposées face à face avec le cas échéant une section cylindrique (202) insérée entre elles, et les pointes des cônes sont orientées vers le bas et vers le haut.

11. Dispositif de mesure selon une des revendications 7 à 10, **caractérisé en ce que** pour la détermination de la profondeur d'enfoncement et pour la transmission des résultats de mesure à la surface il est prévu des capteurs de déplacement mécaniques et/ou électriques et/ou acoustiques (13, 23).

12. Dispositif de mesure selon une des revendications 7 à 11, **caractérisé en ce qu'**une unité d'exploitation (3) est prévue pour l'enregistrement, l'exploitation, la transmission et/ou l'affichage de la profondeur d'enfoncement de l'élément plongeant (1, 2 2', 2").

13. Dispositif de mesure selon la revendication 12, **caractérisé en ce que** l'unité d'exploitation (3) présente des moyens pour la transmission sans fil de la profondeur d'enfoncement mesurée et/ou des valeurs de mesure exploitées.

14. Agencement de mesure sur un mur de quai (Q), **caractérisé en ce qu'**il est prévu une pluralité de dispositifs de mesure selon l'une des revendications 7 à 13 en alignement à distance les uns des autres à proximité du mur de quai (Q).
